# EUROPÄISCHE PATENTSCHRIFT

(11) **EP 2 653 607 B1**
(45) Veröffentlichungstag und Bekanntmachung des Hinweises auf die Patenterteilung: **01.02.2017**
(21) Anmeldenummer: 12164957.8
(22) Anmeldetag: 20.04.2012
(51) Int. Cl.: D06N 3/00, D06N 3/06, B32B 5/02, B32B 27/12, B32B 27/30, B32B 37/02, B60R 13/02

(54) **Verfahren zum Herstellen eines Kunstleders**
Method for manufacturing an artificial leather
Procédé de fabrication d'un cuir synthétique

(43) Veröffentlichungstag der Anmeldung: 23.10.2013
(73) Patentinhaber: Konrad Hornschuch AG, 74679 Weissbach (DE)
(72) Erfinder: Wittmann, Gabriele Beate, 74613 Öhringen (DE); Kammerer, Birgit, 74635 Kupferzell (DE); Kaspar, Sonja, 74238 Krautheim-Neunstetten (DE)
(74) Vertreter: Wagner Albiger & Partner Patentanwälte mbB

(56) Entgegenhaltungen:
- EP-A1- 2 357 080
- WO-A1-01/14138
- WO-A1-2011/091878
- WO-A2-02/04740
- DE-A1- 1 933 255
- DE-U1-202011 004 902

## Beschreibung

Die Erfindung betrifft h ein Verfahren zum Herstellen eines Kunstleders gemäß dem Oberbegriff des Patentanspruches 1.

Kunstleder sind vielfältig bekannt und werden beispielsweise als Dekorschichten für Innenausstattungsteile von Kraftfahrzeugen verwendet, welche direkt und/oder indirekt der Sonneneinstrahlung ausgesetzt sind. Das dreidimensionale textile Trägermaterial verleiht dem Kunstleder seine gewünschte Festigkeit, während die Beschichtung die Sichtseite bildet, dem Kunstleder seine Oberflächeneigenschaften verleiht und eine natürliche Lederoberfläche nachahmt, wozu sie ggf. auch mit einer Prägung nach Art einer Ledernarbung versehen ist.

Insbesondere für die Ausbildung hochwertiger Oberflächen für Innenausstattungsteile eines Kraftfahrzeuges ist es wünschenswert, dass Kunstleder möglichst faltenfrei an den dreidimensionalen Verlauf des Innenausstattungsteiles anpassen zu können, wobei darüber hinaus die Oberfläche des Kunstleders weich, d.h. elastisch nachgiebig gestaltet sein soll, um eine hochwertige Optik zu vermitteln.

Aus der DE 102 57 399 B4 ist es zu diesem Zweck bereits bekannt, eine Dekorschicht für einen Innenausstattungsteil eines Kraftfahrzeuges aus einem Abstandsgewirke als Trägermaterial mit einer darauf aufgebrachten und vorzugsweise aus Polyurethan bestehenden Oberflächenschicht auszugestalten. Bei der bekannten Dekorschicht weist jedoch das eingesetzte Abstandsgewirke im Bereich seiner die Oberflächen bildenden Außenseiten vorstehende Fäden, Fransen oder Schlingen auf, die als Verkrallungselemente für die Oberflächenschicht dienen und überdies wird die Oberflächenschicht unter Zwischenlage einer Klebstoffschicht mit dem Abstandsgewirke verbunden. Dies ist aufwendig und verteuert den Herstellungsprozess für eine solche Dekorschicht, was als verbesserungsbedürftig angesehen wird.

Aufgabe der vorliegenden Erfindung ist es daher, ein Verfahren zur Herstellung eines Kunstleders vorzuschlagen, welches besonders rationell anwendbar ist und insbesondere für Anwendungen der Belederung im Automobilinnenraum besonders geeignet ist.

Zur Lösung der gestellten Aufgabe wird erfindungsgemäß die Ausgestaltung des Verfahrensgemäß den Merkmalen des Patentanspruches 1 vorgeschlagen.

Vorteilhafte Ausgestaltungen und Weiterbildungen der Erfindung sind Gegenstand der abhängigen Ansprüche.

Das erfindungsgemäße Verfahren zum Herstellen eines Kunstleders mit einem textilen Trägermaterial und einer einseitig auf das Trägermaterial aufgebrachten Beschichtung, die auf Basis von PVC oder eines PVC-Compounds gebildet ist und drei aufeinanderfolgende Schichten aufweist, umfasst die folgenden Schritte:
1. Aufbringen der die spätere Deckschicht bildenden dritten Schicht der Beschichtung in pastöser Form auf eine ablösbare Unterlage und nachfolgendes Trocknen der dritten Schicht;
2. Aufbringen der zweiten Schicht der Beschichtung als Zwischenschicht auf die getrocknete dritte Schicht und nachfolgendes Trocknen der zweiten Schicht;
3. Aufbringen der ersten Schicht der Beschichtung in pastöser Form auf die getrocknete zweite Schicht;
4. Aufbringen des textilen Trägermaterials auf die in pastöser Form vorliegende erste Schicht und nachfolgendes Trocknen der ersten Schicht;
5. Ablösen der dritten Schicht von der Unterlage;
6. Prägen zumindest der dritten Schicht der Beschichtung,
wobei als Trägermaterial ein dreidimensionales Trägermaterial zum Einsatz kommt und das Prägen bei einer Temperatur von 130° bis 250° Celsius im Vakuumprägeverfahren erfolgt.

Unter Anwendung dieses an sich bekannten Umkehrverfahrens, bei welchem die spätere Oberseite des Kunstleders als erste Schicht auf einer ablösbaren Unterlage aufgebracht und nachfolgend die weiteren Schichten darauf aufgebracht werden, wird ein Kunstleder erhalten, dessen Beschichtung ohne besondere Vorbereitung des textilen Trägermaterials und ohne zu Hilfenahme von weiteren Klebstoffschichten eine dauerhafte Verbindung mit dem Trägermaterial eingeht.

Das Trocknen der ersten, zweiten und oder dritten Schicht erfolgt bevorzugt bei einer Temperatur von 140 bis 240 ° Celsius in entsprechenden Trockenöfen.

Es wird eine kontinuierliche Herstellung des Kunstleders angestrebt, dergestalt, dass die ablösbare Unterlage z.B. von einem endlos umlaufenden silikonisierten Papierband bzw. Release-Papierband gebildet wird, auf dem zunächst die spätere Deckschicht bildende dritte Schicht in pastöser Form aufgebracht und nachfolgend getrocknet wird, sodann hierauf die zweite Schicht als Zwischenschicht aufgebracht und nachfolgend getrocknet wird, dann die erste Schicht der Beschichtung in pastöser Form auf die getrocknete zweite Schicht aufgebracht wird und dann das textile Trägermaterial auf die noch in pastöser Form vorliegende erste Schicht aufgelegt wird, bevor diese erste Schicht ebenfalls getrocknet wird. Im Anschluss daran kann die ablösbare Unterlage von der darauf befindlichen dritten Schicht getrennt werden und das solchermaßen gebildete Kunstleder abgenommen und gewendet werden, so dass das Trägermaterial unterseitig zum Liegen kommt.

Um den nach dem erfindungsgemäßen Verfahren hergestellten Kunstleder die gewünschte Optik, Druckelastizität, Schubweichheit und Rücksprungeigenschaft zu verleihen, kann nach einem Vorschlag der Erfindung als textiles Trägermaterial ein Abstandsgewirke, -gestricke oder -gewebe mit durch Polfäden verbundenen ersten und zweiten Warenflächen und glattflächigen Außenseiten ohne vorstehende Fäden oder ein Nadel- oder Abstandsvlies verwendet werden.

Zumindest die dritte Schicht der Beschichtung kann ferner nach dem Ablösen von der Unterlage bei einer Temperatur von 130° Celsius bis 250° Celsius, vorzugsweise 175° Celsius bis 210° Celsius und insbesondere 185° Celsius im Vakuumprägeverfahren geprägt werden.

Durch die erfindungsgemäße Anwendung des Vakuumprägeverfahrens ist es möglich, die Beschichtung des zuvor bereits hergestellten Kunstleders, d.h. des Verbundes aus Trägermaterial und Beschichtung nachträglich mit einer individuellen Narbung zu versehen. Unter Anwendung konventioneller Stahlprägeverfahren ist eine derartige nachträgliche Prägung ohne Verlust der Dicke nicht möglich, da hierbei durch die unvermeidliche Temperatur- und Druckeinwirkung die Dicke und die besonderen Eigenschaften des Kunstleders, wie Schubweichheit und Rücksprungkraft extrem negativ beeinflusst werden, insbesondere wenn als textiles Trägermaterial ein Abstandsgewirke verwendet wird.

Auch durch Vorprägung des als Unterlage dienenden Releasepapiers oder durch Gießprozesse in geprägte Silikone kann die durch Prägen beispielsweise erzeugte Ledernarbung nachträglich nicht mehr dargestellt oder variiert werden.

Der Vorteil des erfindungsgemäß angewendeten Vakuumprägeverfahrens ist hingegen die Abwesenheit von Druckbelastung und negativ sich auswirkender Temperatur auf das Trägermaterial, insbesondere ein Abstandsgewirke, so dass ein Schrumpf im Abstandsgewirke weitestgehend ausgeschlossen wird und die Eigenschaften des dreidimensional erstreckten Trägermaterials erhalten bleiben.

Die als Zwischenschicht der Beschichtung verwendete zweite Schicht gemäß der Erfindung kann je nach Anwendungsfall kompakt, d.h. ungeschäumt oder geschäumt ausgeführt werden. Im Falle einer geschäumten Ausführung erfolgt das Aufschäumen nach dem Aufbringen auf die dritte Schicht.

Das erfindungsgemäß hergestellte Kunstleder umfasst somit ein dreidimensionales textiles Trägermaterial und eine einseitig auf das Trägermaterial aufgebrachte Beschichtung, die auf Basis von Polyvinylchlorid (PVC) gebildet ist und drei aufeinanderfolgend aufgebrachte Schichten umfasst, von denen die erste Schicht unmittelbar und ohne haftvermittelnde Klebstoffschicht auf das Trägermaterial aufgebracht ist, die zweite Schicht als Zwischenschicht ausgebildet und unmittelbar auf die erste Schicht aufgebracht ist und die dritte Schicht als Deckschicht unmittelbar auf die zweite Schicht aufgebracht ist.

Im Rahmen der Erfindung wurde festgestellt, dass durch eine solche Ausgestaltung der Beschichtung mit insgesamt drei aufeinanderfolgend aufgebrachten Schichten aus PVC oder einem PVC-Compound auf ein textiles dreidimensional erstrecktes Trägermaterial ein Kunstleder hergestellt werden kann, welches ohne Klebstoffschichten zwischen der Beschichtung und dem textilen Trägermaterial auskommt, so dass auf den zusätzlichen Aufwand eines Klebstoffauftrages auf das Trägermaterial vor dem Aufbringen der Beschichtung verzichtet werden kann. Durch diese Abwesenheit einer Klebstoffschicht erfährt auch das Trägermaterial keine negativen Beeinflussungen seiner mechanischen Eigenschaften durch in das Trägermaterial eingedrungenen Klebstoff, so dass sich das erfindungsgemäße Kunstleder durch beste Verarbeitbarkeit und ein besonderes hochwertiges Erscheinungsbild auszeichnet. Die Abwesenheit einer Klebstoffbeschichtung beim erfindungsgemäßen Kunstleder beugt auch unerwünschten Ausgasungen und damit einhergehenden Geruchsbeeinträchtigungen vor.

Nach einem Vorschlag der Erfindung wird das textile Trägermaterial von einem Abstandsgewirke, Abstandsgestricke oder Abstandsgewebe mit durch Polfäden voneinander beabstandeten ersten und zweiten Warenflächen gebildet, wobei die Warenflächen an ihren den Polfäden abgewandten Außenseiten glattflächig ohne vorstehende Fäden ausgebildet sind und die erste Schicht der Beschichtung unmittelbar auf die Außenseite der zweiten Warenfläche aufgebracht ist. Es hat sich im Rahmen der Erfindung überraschend gezeigt, dass nicht nur auf eine haftvermittelnde Klebstoffschicht zwischen Trägermaterial und Beschichtung verzichtet werden kann, sondern darüber hinaus ist die erzielte Haftung der Beschichtung am Trägermaterial auch so hoch, dass das Abstandsgewirke keine zusätzlichen Verkrallungshilfen wie vorstehende Fäden, Fransen oder Schlingen benötigt, so dass die Auswahl der geeigneten Abstandsgewirke unter diesem Aspekt nicht eingeschränkt ist.

Unter einem Abstandsgewirke wird im Rahmen der Erfindung ein sich dreidimensional erstreckendes Flächengebilde mit zwei durch Polfäden voneinander beabstandet verbundenen gewirkten Warenflächen verstanden, wohingegen bei einem Abstandsgestricke zwei gestrickte Warenflächen durch Polfäden voneinander beabstandet verbunden sind. Bei einem Abstandsgewebe schließlich werden zwei Gewebedecklagen als Warenflächen durch senkrechte Steh- bzw. Polfäden auf definiertem Abstand gehalten, wobei die Erzeugung der dreidimensionalen Erstreckung im Webprozess erfolgt.

Mit Vorteil weist das Trägermaterial eine Stauchhärte nach DIN EN ISO 3386-1 von 5 bis 45 kPa aufweist.

Alternativ kann nach der Erfindung auch ein geglättetes Nadelvlies oder einen Abstandsvliesstoff als dreidimensionales textiles Trägermaterial vorgesehen sein, welches z.B. durch Krempeln der Vliesfasern und thermische sowie mechanische Bindung oder durch Verbindung des Faserflors mittels Nähwerktechnik oder Maschenbildung hergestellt wird.

Das im Rahmen der Erfindung verwendete textile Trägermaterial weist vorteilhaft ein Flächengewicht von 100 bis 1000 g pro Quadratmeter und eine Dicke von 1,0 bis 8 mm auf.

Das textile Trägermaterial kann auf Basis von Polyester, Polyamid, Baumwolle, Viskose, Wolle und/oder Gemischen derselben hergestellt sein, wobei Oberund Unterseite desselben auf gleicher oder auch unterschiedlicher Materialbasis hergestellt sein können.

Die erste Schicht der Beschichtung weist ein Flächengewicht von 50 bis 200 g pro Quadratmeter auf. Die zweite Schicht der Beschichtung kann eine Dicke von 0,15 bis 2,0 mm und die dritte Schicht eine Dicke von 0,1 bis 1,2 mm aufweisen.

Bei Bedarf kann das Kunstleder gemäß der Erfindung zumindest im Bereich der dritten Schicht der Beschichtung oberflächlich geprägt werden, beispielsweise mit einer Ledernarbung.

Es versteht sich, dass die Beschichtung durch Zusatz verschiedener Additive in ihren Eigenschaften beeinflusst werden kann. Beispielsweise kann einer oder mehreren Schichten der Beschichtung ein Flammschutzmittel, wie Antimontrioxid beigegeben sein, während insbesondere die die spätere Sichtfläche bildende dritte Schicht durch Zugabe von Pigmenten hinsichtlich der Farbe und dem Glanzgrad je nach Bedarf eingestellt werden kann.

Die Erfindung wird nachfolgend anhand von Ausführungsbeispielen in der Zeichnung in weiteren Details erläutert. Es zeigen:
- Fig. 1: in schematisierter Darstellung einen Schnitt durch eine erste Ausführungsform des erfindungsgemäßen Kunstleders,
- Fig. 2: in schematisierter Darstellung einen Schnitt durch eine zweite Ausführungsform des erfindungsgemäßen Kunstleders.

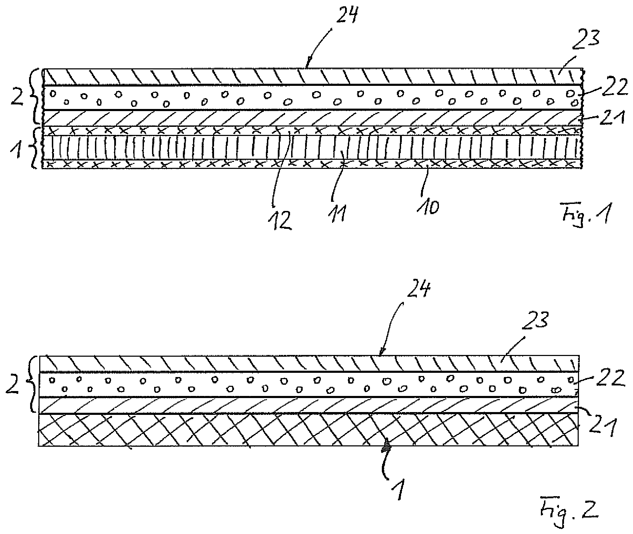

Aus der Figur 1 ist ein Verbund aus einem textilen dreidimensionalen Trägermaterial 1 und einer aus drei Schichten 21, 22, 23 bestehenden und einseitig auf das textile Trägermaterial 1 aufgebrachten Beschichtung 2 ersichtlich, die als Kunstleder z.B. für Anwendungen im Innenraum von Kraftfahrzeugen Verwendung findet.

Das textile, dreidimensional erstreckte Trägermaterial 1 wird im dargestellten Ausführungsbeispiel gemäß Figur 1 von einem Abstandsgewirke auf Basis von Polyesterfasern gebildet, welches zwei kettengewirkte Warenflächen 10, 12 umfasst, die zugleich die Außenseiten bzw. Oberflächen des Abstandsgewirkes bilden. Diese beiden Warenflächen 10, 12 sind voneinander beabstandet und werden in diesem Abstand von zwischen beiden Warenflächen 10,12 senkrecht verlaufenden Polfäden 11 in an sich bekannter Weise gehalten. Ein solches Abstandsgewirke zeichnet sich durch besonders hohe Druckelastizität, Schubweichheit und gute Rücksprungeigenschaften bei mechanischer Beanspruchung aus.

Die Oberflächen der beiden Warenflächen 10,12 können aufgrund des eingesetzten Webverfahrens mit regelmäßigen Öffnungen in Richtung der Polfäden 11 versehen sein, d.h. sie sind porös, bilden jedoch insgesamt eine glatte Oberfläche ohne vorstehende Fäden, Fasern, Fransen oder Schlingen aus.

Auf die den Polfäden 11 abgewandte Außenseite der Warenfläche 12 ist die erste Schicht 21 einer dreischichtig aufgebauten Beschichtung 2 aufgebracht, wobei alle Schichten 21, 22, 23 der Beschichtung 2 auf Basis von PVC gebildet sind.

Wesentlich für das dargestellt Kunstleder ist es, dass die erste Schicht 21 ohne Zwischenlage einer Klebstoffschicht unmittelbar auf der Warenfläche 12 des Abstandsgewirkes aufgebracht ist und mit dem Abstandsgewirke eine haftfeste Verbindung eingeht.

Sodann ist auf die erste Schicht 21 eine geschäumte zweite Schicht 22 aufgebracht, die auch die Beschichtung 2 elastisch nachgiebig ausgestaltet und auch diese zweite Schicht 22 ist sodann die die Deckschicht des Kunstleders bildende dritte Schicht 23 aufgebracht, die ebenso wie die erste Schicht 21 aus kompakten, d.h. ungeschäumten PVC-Compound gebildet ist. Alle diese Schichten haften in der dargestellten Reihenfolge ohne Zwischenlage von haftvermittelnden Klebstoffschichten aufeinander.

Die mit Bezugszeichen 24 gekennzeichnete Sichtseite des Kunstleders kann darüber hinaus mit einer Oberflächenprägung, beispielsweise einer Ledernarbung versehen sein, wobei weiter bevorzugt für das Einbringen der Oberflächenprägung das Vakuumprägeverfahren angewandt wird.

Das Ausführungsbeispiel gemäß Figur 2 weist hinsichtlich des Aufbaus und der Ausgestaltung der Beschichtung 2 den gleichen Aufbau und die gleiche Struktur wie im Ausführungsbeispiel 1 erläutert auf, allerdings ist in diesem Ausführungsbeispiel das dreidimensional erstreckte Trägermaterial 1 nicht von einem Abstandsgewirke, sondern von einem Nadelvlies aus Polyesterfasern gebildet, welches geglättete Oberflächen aufweist. Auch in diesem Ausführungsbeispiel haftet die erste Schicht 21 der Beschichtung 2 ohne Zwischenlage einer Klebstoffschicht unmittelbar auf der glatten Oberfläche des Trägermaterials 1.

### Beispiele:

Mögliche Ausgestaltungen eines erfindungsgemäßen Kunstleders werden nachfolgend anhand von Ausführungsbeispielen erläutert, wobei jedoch die Erfindung nicht auf diese spezielle Ausgestaltung beschränkt ist.

### Beispiel 1:

Als textiles dreidimensional erstrecktes Trägermaterial wurde ein Abstandsgewirke aus Polyesterfasern mit einem Flächengewicht von 550 g pro Quadratmeter eingesetzt, welches eine Dicke von 3,8 mm eine Stauchhärte von 22 kPa und eine Höchstzugkraft in Längsrichtung von 1000 N und in Querrichtung von 270 N und eine Weiterreißkraft in Längsrichtung von 15 N und in Querrichtung von 25 N aufwies.

Im Umkehrverfahren wurden zunächst die dritte, dann die zweite und dann die erste Schicht der Deckschicht beginnend mit der dritten Schicht auf einer ablösbaren Unterlage aufeinanderfolgend aufgebaut bevor dieses Trägermaterial sodann mit der ersten Schicht der Beschichtung ohne zu Hilfenahme einer haftvermittelnden Klebeschicht verbunden wurde.

Die erste Schicht wurde aus einem für Pastenverarbeitung geeigneten PVC mit einem K-Wert von 70-80 unter Zusatz üblicher Weichmacher (Trimellitate, Phtalate, Adipate, Sebicate) und Stabilisatoren (Metallseifen) auf ein Releasepapier gestrichen und anschließend bei 140 - 240 °C getrocknet.

Die zuerst hergestellte dritte Schicht wurde aus einem für Pastenverarbeitung geeigneten PVC mit einem K-Wert von 70-80 unter Zusatz üblicher Weichmacher (Trimellitate, Phtalate, Adipate, Sebicate) und Stabilisatoren (Metallseifen) sowie Pigmenten auf ein Releasepapier gestrichen und anschließend bei 140 - 240 °C getrocknet.

Auf die solchermaßen hergestellte dritte Schicht der Beschichtung wurde die zweite Schicht aufgestrichen, welche ebenfalls aus einem PVC mit einem K-Wert von 70-80 hergestellt und unter Zusatz eines geeigneten Treibmittels schäumfähig eingestellt wurde. Zusätzlich enthielt diese zweite Schicht auch Flammschutzmittel (Antimontrioxid, Aluminiumhydroxid und weitere) sowie Pigmente zur Einfärbung. Die geschäumte und auf die dritte Schicht aufgebrachte zweite Schicht wurde sodann gemeinsam mit der dritten Schicht in einemm weiteren Trocknungsschritt bei 140 - 240 °C getrocknet.

Schließlich wurde auf die getrocknete zweite Schicht die erste Schicht aus einem für Pastenverarbeitung geeigneten PVC mit einem K-Wert von 70-80 unter Zusatz üblicher Weichmacher (Trimellitate oder Phtalate, Adipate, Sebicate) und Stabilisatoren (Metallseifen) aufgebracht und vor der Trocknung dieser Schicht das Trägermaterial aufgelegt und danach wurde der Gesamtverbund nochmals einer Hitze von 140 - 240 °C ausgesetzt, um auch die erste Schicht zu trocknen, wobei sich die dauerhafte Verbindung zum Trägermaterial einstellte, ohne dass es haftungserhöhenden Maßnahmen bedurfte.

### Beispiel 2:

Als Trägermaterial wurde ein Abstandsgewirke aus Polyesterfasern mit einem Flächengewicht von 360 g pro Quadratmeter, einer Dicke von 2,3 mm und einer Stauchhärte von 15,0 kPa mit einer Beschichtung entsprechend Beispiel 1 versehen und anschließend wurde die Beschichtung im Bereich ihrer dritten Schicht mit einer Ledernarbung geprägt.

### Beispiel 3:

Als Trägermaterial wurde ein Abstandsgewirke aus Polyesterfäden mit einem Flächengewicht von 285 g pro Quadratmeter, einer Dicke von 3,8 mm und einer Stauchhärte von 14,0 kPa eingesetzt, wobei der Aufbau der damit verbundenen Deckschicht des Beispiels 1 entsprach.

### Beispiel 4:

Mit der gleichen Beschichtung wie im Beispiel 1 wurde ein geglättetes Polyester-Nadelvlies mit einem Flächengewicht von 500 g pro Quadratmeter und einer Dicke von 5 mm ohne Zuhilfenahme von zusätzlichen Klebstoffschichten verbunden und zu einem Kunstleder mit im Bereich der dritten Schicht der Beschichtung im Vakuumprägeverfahren aufgebrachter Ledernarbung verarbeitet.

Die solchermaßen erhaltenen Kunstleder wiesen exzellente Haptik, Druckelastizität, Schubweichheit und Rücksprungeigenschaft auf, besaßen besondere Tieftemperatur- und Langzeittemperaturbeständigkeiten über 120° Celsius, Airbagschussbeständigkeit, Heißlichtalterungsbeständigkeit und sehr niedrige Emissionswerte, die sie für Anwendungen im Innenraum von Kraftfahrzeugen besonders prädestinieren.

Insbesondere ist es möglich, Innenausstattungsteile eines Kraftfahrzeuges, wie Instrumententafeln, Türseiten und Konsolen sowie Sitzbereiche mit sichtbaren Oberflächen aus derartigen Kunstledern gemäß der Erfindung zu versehen.

## Patentansprüche

1. Verfahren zum Herstellen eines Kunstleders mit einem textilen Trägermaterial (1) und einer einseitig auf das Trägermaterial (1) aufgebrachten Beschichtung (2), wobei die Beschichtung (2) auf Basis von Polyvinylchlorid gebildet ist und drei aufeinander folgende Schichten (21), (22), (23) aufweist, umfassend die folgenden Schritte:
1. Aufbringen der die spätere Deckschicht bildenden dritten Schicht (23) der Beschichtung (2) in pastöser Form auf einer ablösbaren Unterlage und nachfolgendes Trocknen der dritten Schicht (23);
2. Aufbringen der zweiten Schicht (22) der Beschichtung (2) als Zwischenschicht auf die getrocknete dritte Schicht (23) und nachfolgendes Trocknen der zweiten Schicht 22;
3. Aufbringen der ersten Schicht (21) der Beschichtung (2) in pastöser Form auf die getrocknete zweite Schicht (22);
4. Aufbringen des textilen Trägermaterials (1) auf die in pastöser Form vorliegende erste Schicht (21) und nachfolgendes Trocknen der ersten Schicht (21);
5. Ablösen der dritten Schicht (23) von der Unterlage;
6. Prägen zumindest der dritten Schicht (23) der Beschichtung (2),
**dadurch gekennzeichnet, dass** als Trägermaterial ein dreidimensionales Trägermaterial zum Einsatz kommt und dass das Prägen bei einer Temperatur von 130° bis 250° Celsius im Vakuumprägeverfahren erfolgt.

2. Verfahren nach Anspruch 1, **dadurch gekennzeichnet, dass** das Trocknen der ersten, zweiten und/oder dritten Schicht (21), (22), (23) bei einer Temperatur von 140° Celsius bis 240° Celsius bewirkt wird.

3. Verfahren nach Anspruch 1 oder 2, **dadurch gekennzeichnet, dass** als textiles Trägermaterial (1) ein Abstandsgewirke mit durch Polfäden (11) verbundenen ersten und zweiten Warenflächen (10,12) und glattflächigen Außenseiten ohne vorstehende Fäden oder ein Nadelvlies verwendet wird.

4. Verfahren nach einem der Ansprüche 1 bis 3, **dadurch gekennzeichnet, dass** das textile Trägermaterial (1) ein Abstandsgewirke, Abstandsgestricke oder Abstandsgewebe mit durch Polfäden (11) von einander beabstandeten ersten und zweiten Warenflächen (10, 12) ist, wobei die Warenflächen (10, 12) an ihren den Polfäden (11) abgewandten Außenseiten glattflächig ohne vorstehende Fäden ausgebildet sind und die erste Schicht (21) der Beschichtung (2) unmittelbar auf die Außenseite der zweiten Warenfläche (12) aufgebracht wird.

5. Verfahren nach einem der Ansprüche 1 bis 4, **dadurch gekennzeichnet, dass** das Trägermaterial (1) eine Stauchhärte nach DIN EN ISO 3386-1 von 5 bis 45 kPa aufweist.

6. Verfahren nach einem der Ansprüche 1, 2 oder 5, **dadurch gekennzeichnet, dass** das textile Trägermaterial (1) ein geglättetes Nadelvlies oder ein Abstandsvliesstoff ist.

7. Verfahren nach einem der Ansprüche 1 bis 6, **dadurch gekennzeichnet, dass** das textile Trägermaterial (1) ein Flächengewicht von 100 bis 1000 g pro Quadratmeter und eine Dicke von 1,0 bis 8 mm aufweist.

8. Verfahren nach einem der Ansprüche 1 bis 7, **dadurch gekennzeichnet, dass** das textile Trägermaterial auf Basis von Polyester, Polyamid, Baumwolle, Viskose, Wolle und/oder Gemische derselben gebildet ist.

9. Verfahren nach einem der Ansprüche 1 bis 8, **dadurch gekennzeichnet, dass** die erste Schicht (21) der Beschichtung (2) mit einem Flächengewicht von 50 bis 200 g pro Quadratmeter aufgebracht wird.

10. Verfahren nach einem der Ansprüche 1 bis 9, **dadurch gekennzeichnet, dass** die zweite Schicht (22) der Beschichtung (2) in einer Dicke von 0,15 bis 2,0 mm aufgebracht wird.

11. Verfahren nach einem der Ansprüche 1 bis 10, **dadurch gekennzeichnet, dass** die dritte Schicht (23) der Beschichtung (2) in einer Dicke von 0,1 bis 1,2 mm aufgebracht wird.

## Claims

1. Method for producing an imitation leather comprising a textile supporting material (1) and a covering (2) applied to one side of the supporting material (1), wherein the covering (2) is produced based on polyvinyl chloride and comprises three successively applied layers (21), (22), (23), including the following steps:
1. applying the third layer (23) of the covering (2), which forms the subsequent top layer, in a paste form onto a removable backing and subsequent drying of the third layer (23);
2. applying the second layer (22) of the covering (2) as an intermediate layer onto the dried third layer (23) and subsequent drying of the second layer 22;
3. applying the first layer (21) of the covering (2) in the paste form onto the dried second layer (22);
4. placing the textile supporting material (1) onto the first layer (21), which is in paste form, and subsequent drying of the first layer (21);
5. detaching the third layer (23) from the backing;
6. embossing at least the third layer (23) of the covering (2),
**characterised in that a** three-dimensional support material is used and that the embossing is by the vacuum-embossing method at a temperature of between 130°C and 250°C.

2. Method according to claim 1, **characterised in that** the drying of the first, second, and/or third layer (21), (22), (23) is carried out at a temperature of between 140° C and 240° C.

3. Method according to claim 1 or claim 2, **characterised in that** a crocheted spacer fabric which has first and second fabric surfaces (10, 12) that are connected to each other by strands of pile yarn (11) and smooth-surfaced outsides without protruding threads or a needle felt is used as the textile supporting material (1).

4. Method according to any one of claims 1 to 3, **characterised in that** the textile supporting material (1) is a crocheted spacer fabric, a spacer knit, or a spacer woven, with first and second fabric surfaces (10, 12) that are spaced apart from each other by strands of pile yarn (11), wherein the fabric surfaces (10, 12), on their outsides oriented away from the pile yarn (11), are embodied as smooth-surfaced, without protruding strands and the first layer (21) of the covering (2) is applied directly to the outside of the second fabric surface (12).

5. Method according to any one of claims 1 to 4, **characterised in that** the supporting material (1) has a compression hardness of 5 to 45 kPa as defined by DIN EN ISO 3386-1.

6. Method according to any one of claims 1, 2 or 5, **characterised in that** the textile supporting material (1) is a smoothed needle felt or a spacer fleece.

7. Method according to any one of claims 1 to 6, **characterised in that the** textile supporting material (1) has a weight per unit area of 100 to 1,000 g per square meter and a thickness of 1.0 to 8 mm.

8. Method according to any one of claims 1 to 7, **characterised in that** the textile supporting material is produced based on polyester, polyamide, cotton, viscose, wool, and/or blends thereof.

9. Method according to any one of claims 1 to 8, **characterised in that** the first layer (21) of the covering (2) has a weight per unit area of 50 to 200 g per square meter.

10. Method according to any one of claims 1 to 9, **characterised in that** the second layer (22) of the covering (2) has a thickness of 0.15 to 2.0 mm.

11. Method according to any one of claims 1 to 10, **characterised in that** the third layer (23) of the covering (2) has a thickness of 0.1 to 1.2 mm.

## Revendications

1. Procédé servant à fabriquer un cuir synthétique avec un matériau de support (1) textile et un revêtement (2) appliqué d'un côté sur le matériau de support (1), dans lequel le revêtement (2) est formé à base de chlorure de polyvinyle et présente trois couches (21), (22), (23) se suivant les unes les autres, comprenant les étapes suivantes consistant à :
1. appliquer la troisième couche (23), formant la couche de recouvrement ultérieure, du revêtement (2) sous une forme pâteuse sur un substrat décollable puis faire sécher la troisième couche (23) ;
2. appliquer la deuxième couche (22) du revêtement (2) en tant que couche intermédiaire sur la troisième couche (23) séchée puis faire sécher la deuxième couche 22 ;
3. appliquer la première couche (21) du revêtement (2) sous une forme pâteuse sur la deuxième couche (22) séchée ;
4. appliquer le matériau de support (1) textile sur la première couche (21) présente sous une forme pâteuse puis faire sécher la première couche (21) ;
5. décoller la troisième couche (23) du substrat ;
6. estamper au moins la troisième couche (23) du revêtement (2),
**caractérisé en ce qu'**est employé, en tant que matériau de support, un matériau de support tridimensionnel, et **en ce que** l'estampage est effectué à une température de 130° à 250° Celsius lors d'un procédé d'estampage sous vide.

2. Procédé selon la revendication 1, **caractérisé en ce que** le séchage de la première, de la deuxième et/ou de la troisième couche (21), (22), (23) est provoqué en présence d'une température de 140° Celsius à 240 ° Celsius.

3. Procédé selon la revendication 1 ou 2, **caractérisé en ce qu'**est utilisé, en tant que matériau de support (1) textile, un tissu à mailles d'espacement avec des premières et des deuxièmes surfaces d'article (10, 12) reliées par des fils polaires (11) et des côtés extérieurs à surface lisse sans fils faisant saillie ou un non-tissé aiguilleté.

4. Procédé selon l'une quelconque des revendications 1 à 3, **caractérisé en ce que** le matériau de support (1) textile est un tissu à mailles d'espacement, un tricot d'espacement ou un tissé d'espacement avec des premières et des deuxièmes surfaces d'article (10, 12) espacées les unes des autres par des fils polaires (11), dans lequel les surfaces d'article (10, 12) sont réalisées, au niveau de leurs côtés extérieurs opposés aux fils polaires (11), avec une surface lisse sans fils faisant saillie et la première couche (21) du revêtement (2) est appliquée directement sur le côté extérieur de la deuxième surface d'article (12).

5. Procédé selon l'une quelconque des revendications 1 à 4, **caractérisé en ce que** le matériau de support (1) présente une résistance à la compression selon la norme DIN EN ISO 3386-1 de 5 à 45 kPa.

6. Procédé selon l'une quelconque des revendications 1, 2 ou 5, **caractérisé en ce que** le matériau de support (1) textile est un non-tissé aiguilleté lissé ou un tissu en non-tissé d'espacement.

7. Procédé selon l'une quelconque des revendications 1 à 6, **caractérisé en ce que** le matériau de support (1) textile présente une masse surfacique de 100 à 1000 g par mètre carré et une épaisseur de 1,0 à 8 mm.

8. Procédé selon l'une quelconque des revendications 1 à 7, **caractérisé en ce que** le matériau de support textile est formé à base de polyester, de polyamide, de coton, de viscose, de laine et/ou de mélanges de ces derniers.

9. Procédé selon l'une quelconque des revendications 1 à 8, **caractérisé en ce que** la première couche (21) du revêtement (2) est appliquée selon une masse surfacique de 50 à 200 g par mètre carré.

10. Procédé selon l'une quelconque des revendications 1 à 9, **caractérisé en ce que** la deuxième couche (22) du revêtement (2) est appliquée en une épaisseur de 0,15 à 2,0 mm.

11. Procédé selon l'une quelconque des revendications 1 à 10, **caractérisé en ce que** la troisième couche (23) du revêtement (2) est appliquée en une épaisseur de 0,1 à 1,2 mm.
